# EUROPEAN PATENT APPLICATION

(11) **EP 4 240 060 A1**
(43) Date of publication of application: **06.09.2023**
(21) Application number: 21897132.3
(22) Date of filing: 26.11.2021
(51) Int. Cl.: H04W 36/18

(54) **NETWORK DEVICE, USER TERMINAL, CHIP, AND WIRELESS COMMUNICATION SYSTEM AND METHOD**

(30) Priority: 26.11.2020 CN 202011354329
(71) Applicant: Huawei Technologies Co., Ltd., Shenzhen, Guangdong 518129 (CN)
(72) Inventor: HUANG, Tengfei, Shenzhen, Guangdong 518129 (CN); CHEN, Xuming, Shenzhen, Guangdong 518129 (CN); JIANG, Bo, Shenzhen, Guangdong 518129 (CN); YU, Quan, Shenzhen, Guangdong 518129 (CN); ZHU, Song, Shenzhen, Guangdong 518129 (CN); FAN, Baomin, Shenzhen, Guangdong 518129 (CN)
(74) Representative: Huawei European IPR
(86) International application number: PCT/CN2021/133501
(87) International publication number: WO 2022/111632

(57) **Abstract**

Embodiments of this application provide a network device, a user terminal, a chip, and a wireless communication system and method. The network device includes a first processor, at least one first antenna, and at least one second antenna. The first antenna and the second antenna are separately coupled to the first processor, the first antenna operates on a first subband, the second antenna operates on a second subband, and the first subband covers a radar band. A communication signal is transmitted through the second antenna when a radar signal exists on the first subband. The communication signal is transmitted through the first antenna when the radar signal does not exist on the first subband.

## Description

This application claims priority to Chinese Patent Application No. 202011354329.X, filed with the China National Intellectual Property Administration on November 26, 2020 and entitled "NETWORK DEVICE, USER TERMINAL, CHIP, AND WIRELESS COMMUNICATION SYSTEM AND METHOD", which is incorporated herein by reference in its entirety.

### TECHNICAL FIELD

This application relates to the field of communication technologies, and in particular, to a network device, a user terminal, a chip, and a wireless communication system and method.

### BACKGROUND

With the development of wireless communication technology, wireless-fidelity (wireless-fidelity, Wi-Fi) is widely used. A 2.4 gigahertz (Gigahertz, GHz) band used by a Wi-Fi network is increasingly congested and cannot meet a development requirement. Currently, a 5 GHz (5150 MHz to 5825 MHz) band is opened successively. Compared with the 2.4 GHz band, the 5 GHz band has a higher data transmission rate and better user experience.

Channels in a Wi-Fi 5G band cover a dynamic frequency selection (dynamic frequency selection, DFS) channel and a non-DFS channel. To prevent a Wi-Fi device operating on the 5G band from interfering with a radar system, the Wi-Fi device operating on the DFS channel needs to support a DFS function, to avoid a radar signal. For example, before using the DFS channel, the Wi-Fi device needs to first perform channel availability check (channel availability check, CAC) to detect whether a radar signal exists on the DFS channel. If the radar signal does not exist, the DFS channel can be used. If the Wi-Fi device detects a radar signal in a process of operating on the DFS channel, the channel needs to be switched to avoid interference to a radar wave. In a process of switching to a new channel, the Wi-Fi device needs to stop transmitting a signal on the original DFS channel, and needs to be re-associated with the new channel. In the process, signal transmission of the Wi-Fi device is interrupted, and services such as a data service are interrupted. As a result, a user terminal cannot access an AP (access point, AP), and cannot access a network, affecting user experience.

### SUMMARY

This application provides a network device, a user terminal, a chip, and a wireless communication system and method, to resolve a problem that signal transmission is interrupted in a process in which a Wi-Fi device switches a channel when radar signal interference occurs on a signal transmission channel.

According to a first aspect, this application provides a network device, including a first processor, at least one first antenna, and at least one second antenna, where the first antenna and the second antenna are separately coupled to the first processor, the first antenna operates on a first subband, the second antenna operates on a second subband, and the first subband covers a radar band;
a communication signal is transmitted through the second antenna when a radar signal exists on the first subband; and
the communication signal is transmitted through the first antenna when the radar signal does not exist on the first subband.

The first processor simultaneously controls the first antenna to operate on a first DFS channel of the first subband and the second antenna to operate on a first channel of the second subband. When the radar signal exists on the first DFS channel of the first subband, the first processor may transfer the communication signal to the first channel of the second subband for transmission. When the radar signal does not exist on the first DFS channel of the first subband, the first processor may transmit the communication signal on the first DFS channel of the first subband. Before the radar signal appears on the first DFS channel of the first subband, the second antenna has already been operating on the first channel of the second subband. Therefore, the first processor may directly transfer the communication signal transmitted on the first DFS channel of the first subband to the first channel of the second subband for transmission, thereby ensuring continuous transmission of the communication signal.

In a possible design, a channel on which the first subband is located is associated when the radar signal exists on the first subband, so that re-association may be avoided when performing channel switching, thereby saving time.

In a possible design, when the radar signal does not exist on the first subband, the first processor is configured to control the first antenna to operate on a second DFS (dynamic frequency selection) channel of the first subband, and perform radar signal interception on a DFS channel of the first subband and a DFS channel of the second subband; and when the radar signal exists on the first subband, the first processor is configured to stop transmitting the communication signal through a first DFS channel of the second subband, and transfer the communication signal to the second DFS channel of the first subband for transmission, where the first channel is the first DFS channel of the second subband. According to the solution provided in this embodiment, when the radar signal appears on the first DFS channel of the second subband on which the communication signal is transmitted, the first processor may switch the communication signal to the second DFS channel of the first subband that has already been operating for transmission, thereby avoiding interruption of transmission of the communication signal.

In a possible design, when the radar signal does not exist on the first subband, the first processor is configured to control the first antenna to operate on a first non-DFS channel of the first subband, and perform radar signal interception on a DFS channel of the second subband; and when the radar signal exists on the first subband, the first processor is configured to stop transmitting the communication signal through a first DFS channel of the second subband, and transfer the communication signal to the first non-DFS channel of the first subband for transmission, where the first channel is the first DFS channel of the second subband. According to the solution provided in this embodiment, when the radar signal appears on the first DFS channel of the second subband on which the communication signal is transmitted, the first processor may switch the communication signal to the first non-DFS channel of the first subband that has already been operating for transmission, thereby avoiding interruption of signal transmission.

In a possible design, when the radar signal does not exist on the first subband, the first processor is further configured to transmit the communication signal through a first DFS channel of the second subband, where the first channel is the first DFS channel of the second subband. According to the solution provided in this embodiment, when the radar signal does not exist on the first DFS channel of the first subband, the first processor may select, based on a data transmission requirement, the first DFS channel of the first subband and/or the first DFS channel of the second subband to transmit the communication signal, to increase a transmission rate of the communication signal.

In a possible design, the first channel is a first non-DFS channel of the second subband.

In a possible design, when the radar signal does not exist on the first subband, the communication signal is further transmitted through the second antenna. According to the solution provided in this embodiment, the first processor transfers a signal to the first DFS channel of the first subband that has already been operating for transmission, thereby avoiding interruption of signal transmission. According to the solution provided in this embodiment, when the radar signal does not exist on the first DFS channel of the first subband, the first processor may select, based on a data transmission requirement, the first DFS channel of the first subband and/or the first non-DFS channel of the second subband to transmit the communication signal, to increase a transmission rate of the communication signal.

In a possible design, the first subband includes a band ranging from 5470 MHz to 5850 MHz, and the second subband includes a band ranging from 5150 MHz to 5350 MHz.

According to a second aspect, this application provides a user terminal, including a second processor, at least one third antenna, and at least one fourth antenna, where the third antenna and the fourth antenna are separately coupled to the second processor, the third antenna operates on a first subband, the fourth antenna operates on a second subband, and the first subband covers a radar band;
a communication signal is transmitted through the fourth antenna when a radar signal exists on the first subband; and
the communication signal is transmitted through the third antenna and the fourth antenna when the radar signal does not exist on the first subband.

The second processor simultaneously controls the third antenna to operate on a first DFS channel of the first subband and the fourth antenna to operate on a first channel of the second subband. When the radar signal exists on the first DFS channel of the first subband, the second processor may transfer the communication signal to the first channel of the second subband for transmission. When the radar signal does not exist on the first DFS channel of the first subband, the second processor may transmit the communication signal on the first DFS channel of the first subband. Before the radar signal appears on the first DFS channel of the first subband, the fourth antenna has already been operating on the first channel of the second subband. Therefore, the second processor may directly transfer the communication signal transmitted on the first DFS channel of the first subband to the first channel of the second subband for transmission, thereby ensuring continuous transmission of the communication signal.

In a possible design, when the radar signal does not exist on the first subband, the second processor is configured to control the third antenna to operate on a second DFS (dynamic frequency selection) channel of the first subband; and when the radar signal exists on the first subband, the second processor is configured to stop transmitting the communication signal through a first DFS channel of the second subband, and transfer the communication signal to the second DFS channel of the first subband for transmission, where the first channel is the first DFS channel of the second subband. According to the solution provided in this embodiment, when the radar signal appears on the first DFS channel of the second subband on which the communication signal is transmitted, the second processor may switch the communication signal to the second DFS channel of the first subband that has already been operating for transmission, thereby avoiding interruption of transmission of the communication signal.

In a possible design, when the radar signal does not exist on the first subband, the second processor is configured to control the third antenna to operate on the first non-DFS channel of the first subband; and when the radar signal exists on the first subband, the second processor is configured to stop transmitting the communication signal through a first DFS channel of the second subband, and transfer the communication signal to the first non-DFS channel of the first subband for transmission, where the first channel is the first DFS channel of the second subband. According to the solution provided in this embodiment, when the radar signal appears on the first DFS channel of the second subband on which the communication signal is transmitted, the second processor may switch the communication signal to the first non-DFS channel of the first subband that has already been operating for transmission, thereby avoiding interruption of signal transmission.

In a possible design, when the radar signal does not exist on the first subband, the second processor is further configured to transmit the communication signal through a first DFS channel of the second subband, where the first channel is the first DFS channel of the second subband. According to the solution provided in this embodiment, when the radar signal does not exist on the first DFS channel of the first subband, the second processor may select, based on a data transmission requirement, the first DFS channel of the first subband and/or the first DFS channel of the second subband to transmit the communication signal, to increase a transmission rate of the communication signal.

In a possible design, when the radar signal does not exist on the first DFS channel of the first subband, the second processor is further configured to transmit the communication signal through a first non-DFS channel of the second subband. According to the solution provided in this embodiment, when the radar signal does not exist on the first DFS channel of the first subband, the second processor may select, based on a data transmission requirement, the first DFS channel of the first subband and/or the first non-DFS channel of the second subband to transmit the communication signal, to increase a transmission rate of the communication signal.

According to a third aspect, this application provides a wireless communication system, including the network device according to the first aspect and the user terminal according to the second aspect.

According to a fourth aspect, this application provides a wireless communication method, including:
performing radar signal interception on a DFS channel of a first subband and a DFS channel of a second subband;
controlling, based on an interception result, a first antenna to operate on a first DFS channel of the first subband, and controlling a second antenna to operate on a first channel of the second subband;
transferring a communication signal to the first channel of the second subband for transmission when a radar signal exists on the first DFS channel of the first subband; and
transmitting the communication signal through the first DFS channel of the first subband when the radar signal does not exist on the first DFS channel of the first subband.

According to a fifth aspect, this application provides a wireless communication method, including:
controlling a first antenna to operate on a first DFS channel of a first subband, and controlling a second antenna to operate on a first channel of a second subband;
transferring a communication signal to the first channel of the second subband for transmission when a radar signal exists on the first DFS channel of the first subband; and
transmitting the communication signal through the first DFS channel of the first subband when the radar signal does not exist on the first DFS channel of the first subband.

According to the wireless communication method provided in this application, the first antenna is controlled to operate on a first DFS channel of the first subband and the second antenna is controlled to operate on a first channel of the second subband. When the radar signal exists on the first DFS channel of the first subband, the communication signal is transferred to the first channel of the second subband for transmission. When the radar signal does not exist on the first DFS channel of the first subband, the communication signal is transmitted on the first DFS channel of the first subband. Before the radar signal appears on the first DFS channel of the first subband, the second antenna has already been operating on the first channel of the second subband. Therefore, the communication signal transmitted on the first DFS channel of the first subband is directly transferred to the first channel of the second subband for transmission, thereby ensuring continuous transmission of the communication signal.

In a possible design, the first channel is a first DFS channel of the second subband, and the method further includes:
controlling the first antenna to operate on the second DFS channel of the first subband when the communication signal is transferred to the first DFS channel of the second subband for transmission;
performing radar signal interception on a DFS channel of a first subband and a DFS channel of a second subband; and
when the radar signal exists on the first DFS channel of the second subband, stopping transmitting the communication signal through the first DFS channel of the second subband, and transferring the communication signal to the second DFS channel of the first subband for transmission.

In a possible design, the first channel is a first DFS channel of the second subband, and the method further includes:
controlling the first antenna to operate on a first non-DFS channel of the first subband when the communication signal is transferred to the first DFS channel of the second subband for transmission;
performing radar signal interception on a DFS channel of the second subband; and
when the radar signal exists on the first DFS channel of the second subband, stopping transmitting the communication signal through the first DFS channel of the second subband, and transferring the communication signal to the first non-DFS channel of the first subband for transmission.

In a possible design, the first channel is a first DFS channel of the second subband, and the method further includes:
transmitting the communication signal through the first DFS channel of the second subband when the radar signal does not exist on the first DFS channel of the first subband.

In a possible design, the first channel is a first non-DFS channel of the second subband, and the method further includes:
transmitting the communication signal through the first non-DFS channel of the second subband when the radar signal does not exist on the first DFS channel of the first subband.

According to a sixth aspect, this application further provides a wireless communication method, including:
controlling a third antenna to operate on a first DFS channel of a first subband, and controlling a fourth antenna to operate on a first channel of a second subband;
transferring a communication signal to the first channel of the second subband for transmission when a radar signal exists on the first DFS channel of the first subband; and
transmitting the communication signal through the first DFS channel of the first subband when the radar signal does not exist on the first DFS channel of the first subband.

The third antenna is controlled to operate on a first DFS channel of the first subband and the fourth antenna is controlled to operate on a first channel of the second subband. When the radar signal exists on the first DFS channel of the first subband, the communication signal is transferred to the first channel of the second subband for transmission. When the radar signal does not exist on the first DFS channel of the first subband, the communication signal is transmitted through the first DFS channel of the first subband. Before the radar signal appears on the first DFS channel of the first subband, the fourth antenna has already been operating on the first channel of the second subband. Therefore, the communication signal transmitted on the first DFS channel of the first subband may be directly transferred to the first channel of the second subband for transmission, thereby ensuring continuous transmission of the communication signal.

In a possible design, the first channel is a first DFS channel of the second subband, and the method further includes:
controlling the third antenna to operate on the second DFS channel of the first subband when the communication signal is transferred to the first DFS channel of the second subband for transmission;
when the radar signal exists on the first DFS channel of the second subband, stopping transmitting the communication signal through the first DFS channel of the second subband, and transferring the communication signal to the second DFS channel of the first subband for transmission.

In a possible design, the first channel is a first DFS channel of the second subband, and the method further includes:
controlling the third antenna to operate on a first non-DFS channel of the first subband when the communication signal is transferred to the first DFS channel of the second subband for transmission;
when the radar signal exists on the first DFS channel of the second subband, stopping transmitting the communication signal through the first DFS channel of the second subband, and transferring the communication signal to the first non-DFS channel of the first subband for transmission.

According to a seventh aspect, this application provides a chip, including a processor and an interface, where
the interface is configured to receive code instructions, and transmit the code instructions to the processor; and
the processor runs the code instructions, to perform the wireless communication method according to the fourth aspect to the sixth aspect.

According to an eighth aspect, this application provides a computer-readable storage medium, including instructions. When the instructions are run on a computer, the computer is enabled to perform the wireless communication method according to the fourth aspect to the sixth aspect.

### BRIEF DESCRIPTION OF DRAWINGS

FIG. 1 is a schematic diagram of communication between a wireless AP and a user terminal according to an embodiment of this application;
FIG. 2 is a principle block diagram of a wireless AP and a user terminal according to an embodiment of this application;
FIG. 3 is a principle block diagram of a wireless AP and a user terminal according to another embodiment of this application;
FIG. 4 is a schematic diagram of association between a wireless AP and a user terminal according to an embodiment of this application;
FIG. 5 is a schematic diagram of association between a wireless AP and a user terminal according to another embodiment of this application;
FIG. 6 is a schematic diagram of association between a wireless AP and a user terminal according to still another embodiment of this application;
FIG. 7 is a schematic diagram of a structure of a wireless AP according to an embodiment of this application;
FIG. 8 is a schematic diagram of a structure of a wireless AP according to another embodiment of this application;
FIG. 9 is a schematic diagram of a structure of a wireless AP according to still another embodiment of this application;
FIG. 10 is a schematic diagram of a structure of a wireless AP according to still another embodiment of this application;
FIG. 11 is a schematic diagram of a structure of a wireless AP according to still another embodiment of this application;
FIG. 12 is a flowchart of a wireless communication method according to an embodiment of this application;
FIG. 13 is a flowchart of a wireless communication method according to another embodiment of this application;
FIG. 14 is a flowchart of a wireless communication method according to still another embodiment of this application;
FIG. 15 is a flowchart of a wireless communication method according to still another embodiment of this application; and
FIG. 16 is a flowchart of a wireless communication method according to still another embodiment of this application; and
FIG. 17 is a flowchart of a wireless communication method according to still another embodiment of this application; and
FIG. 18 is a flowchart of a wireless communication method according to still another embodiment of this application.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

In the descriptions of this application, unless otherwise explicitly specified and defined, the terms "first" and "second" are merely intended for a purpose of description, and should not be understood as an indication or implication of relative importance. Unless otherwise specified or described, the term "a plurality of' refers to two or more. The terms "coupling" and "fixed" should be understood in a broad sense. For example, "coupling" may be fixed coupling, or may be detachable coupling, integral coupling, or electrical coupling; or may be directly connected, or may be indirectly connected through an intermediate medium. For a person of ordinary skill in the art, specific meanings of the foregoing terms in the present invention may be understood based on a specific situation.

Before using a DFS channel, a Wi-Fi master device needs to perform CAC on the DFS channel to detect whether a radar signal exists on the DFS channel. If the radar signal does not exist, the DFS channel can be used. If the Wi-Fi master device detects the radar signal in a process of operating on the DFS channel, the Wi-Fi master device needs to switch from the DFS channel to another channel in a specified time, to avoid interference to a radar wave, and the DFS channel is no longer used in a NOP (non-occupancy period, non-occupancy period). If the radar signal is not detected, the DFS channel can continue to be used. In a process of switching to a new channel, the Wi-Fi master device needs to stop transmitting a signal on the original DFS channel, and needs to be re-associated with the new channel. In the process, signal transmission of the Wi-Fi master device is interrupted. As a result, a user terminal cannot access an access point (access point, AP), and cannot access a network. The FCC (federal communications commission, Federal Communications Commission of the United States) requires that time spent on CAC is 60 seconds. The CE (conformite europeenne, Conformite Europeenne) requires that time spent on CAC performed on a band other than 5600 MHz to 5650 MHz is 60 seconds, and requires that time spent on CAC performed on a band ranging from 5600 MHz to 5650 MHz is 10 minutes. FCC and CE define a band ranging from 5250 MHz to 5350 MHz and a band ranging from 5470 MHz to 5725 MHz as DFS channel bands, and other bands as non-DFS channel bands. If definition of the DFS channel varies with regulations, the regulations prevail.

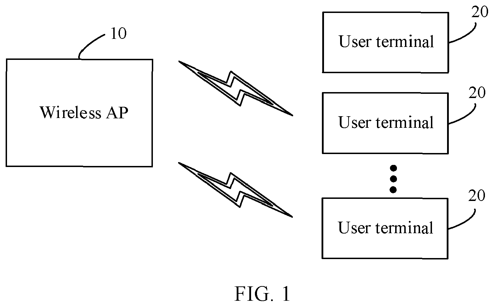

Refer to FIG. 1. An embodiment of this application provides a wireless communication system, including network devices such as a wireless access point (wireless access point, wireless AP) 10 and a user terminal 20. In some embodiments, the wireless access point may be a Wi-Fi master device, the wireless access point may be a device such as a router, the user terminal 20 may be a station (STA, Station), and the station may be fixed, mobile, or portable. The station may be a smartphone, a tablet computer, a palmtop computer, a notebook computer, a desktop computer, a mobile internet device (mobile internet device, MID), a wearable device (such as a smart watch or a smart bracelet), or the like. The wireless AP 10 may be coupled to a plurality of user terminals 20. The wireless AP 10 is configured to provide a wireless access service for the user terminal 20, and allow access of a wireless device such as the user terminal 20.

The user terminal 20 is coupled to the wireless AP 10, to access a network. An operating channel of the user terminal 20 is determined by the wireless AP 10, and the operating channel of the user terminal 20 changes with an operating channel of the wireless AP 10. Specifically, after being powered on and initialized, the wireless AP 10 starts to operate, and generally needs to perform spectrum scanning, detect interference sources in a service area of the wireless AP 10, and determine channels that are interfered. Then, the wireless AP 10 selects a proper Wi-Fi channel for communication based on a Wi-Fi channel set by a user, or based on a Wi-Fi channel selection policy of the wireless AP 10 and a spectrum scanning result. Subsequently, the wireless AP 10 sends a broadcast message to the user terminal 20 in the service area, and includes identifier information corresponding to the Wi-Fi channel selected by the wireless AP 10 in the broadcast message to notify the user terminal 20 in the service area of the wireless AP 10. After receiving the broadcast message, the user terminal 20 obtains the identifier information corresponding to the Wi-Fi channel by parsing the broadcast message, to learn the Wi-Fi channel on which the wireless AP 10 currently operates, and determine an operating frequency range corresponding to the Wi-Fi channel. The user terminal 20 sends an authentication request to the wireless AP 10, and requests to access a WLAN network provided by the wireless AP 10. The authentication request includes a shared key. The wireless AP 10 authenticates the user terminal 20 based on the shared key, and after the authentication succeeds, sends an authentication response to the user terminal 20. The user terminal 20 sends an association request to the wireless AP 10, and requests to associate with the WLAN network provided by the wireless AP 10. The wireless AP 10 sends an association response to the user terminal 20 after the association succeeds. The user terminal 20 may perform data communication with the wireless AP 10 on the Wi-Fi channel selected by the wireless AP 10.

The wireless communication system may be a Wi-Fi device, or may be another communication device.

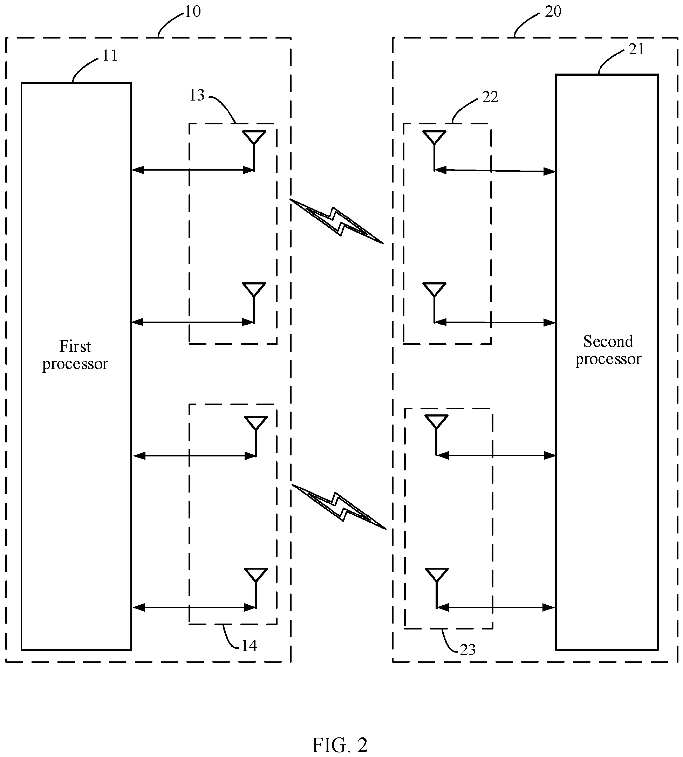

Refer to FIG. 2. A wireless AP 10 includes a first processor 11, at least one first antenna 13, and at least one second antenna 14. The first antenna 13 and the second antenna 14 are separately coupled to the first processor 11.

The first processor 11 may include one or more processing units. For example, the first processor 11 may include a controller, a baseband, and/or a radio frequency integrated circuit. The controller may generate an operation control signal based on an instruction operation code and a time sequence signal, to complete control of instruction reading and instruction execution. A memory may be arranged in the first processor 11, and is configured to store instructions and data. In some embodiments, the memory in the first processor 11 includes a cache. The memory may store instructions or data that are/is just used or cyclically used by the first processor 11. If the first processor 11 needs to use the instructions or the data again, the instructions or the data may be directly invoked from the memory, to avoid repeated access and reduce a waiting time of the first processor 11. This improves system efficiency. In some embodiments, the memory may be further arranged outside the first processor 11, and is coupled to the first processor 11.

The first processor 11 may perform frequency modulation on a signal based on a wireless communication technology. The wireless communication technology may include a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

The first antenna 13 is configured to transmit and receive an electromagnetic wave signal (a radio frequency signal, for example, a Wi-Fi signal). The first antenna 13 or a plurality of groups of antennas may be configured to cover one or more communication bands. The plurality of antennas each may be one or more of a multi-band antenna, an array antenna, or an on-chip (on-chip) antenna.

The first processor 11 is coupled to the first antenna 13, to implement various functions associated with transmitting and receiving the radio frequency signal. For example, when the electronic device transmits a signal, a baseband synthesizes to-be-transmitted data (a digital signal) into a to-be-transmitted baseband signal, and the baseband signal is converted by the radio frequency integrated circuit into a sending signal (the radio frequency signal). The sending signal is amplified by a power amplifier, and an amplified output signal output by the power amplifier is transmitted to a switching switch and transmitted by the first antenna. A path on which the sending signal sent by the first processor to the switching switch is a first transmit path (or referred to as a first transmit path). When the electronic device needs a receive signal, the first antenna 13 sends the receive signal (the radio frequency signal) to the switching switch. The switching switch sends the radio frequency signal to the radio frequency integrated circuit. The radio frequency integrated circuit processes the radio frequency signal into a baseband signal and sends the baseband signal to the baseband. The baseband converts the processed baseband signal into data, and sends the data to a corresponding application processor. A path on which the radio frequency signal is sent by the switching switch to the first processor 11 is a first receive path (or referred to as a first receive path). A port coupled to the first transmit path in the first processor 11 is a transmit port TX, and a port coupled to the first receive path in the first processor 110 is a receive port RX.

The second antenna 14 is configured to transmit and receive an electromagnetic wave signal (a radio frequency signal, for example, a Wi-Fi signal). The second antenna 14 or a plurality of groups of antennas may be configured to cover one or more communication bands. The plurality of antennas each may be one or more of a multi-band antenna, an array antenna, or an on-chip (on-chip) antenna.

The first processor 11 is coupled to the second antenna 14, to implement various functions associated with transmitting and receiving the radio frequency signal. For example, when the electronic device transmits a signal, a baseband synthesizes to-be-transmitted data (a digital signal) into a to-be-transmitted baseband signal, and the baseband signal is converted by the radio frequency integrated circuit into a sending signal (the radio frequency signal). The sending signal is amplified by a power amplifier, and an amplified output signal output by the power amplifier is transmitted to a switching switch and transmitted by the second antenna 14. A path on which the sending signal sent by the first processor 11 to the switching switch is a second transmit path (or referred to as a second transmit path). When the electronic device needs a receive signal, the second antenna 14 sends the receive signal (the radio frequency signal) to the switching switch. The switching switch sends the radio frequency signal to the radio frequency integrated circuit. The radio frequency integrated circuit processes the radio frequency signal into a baseband signal and sends the baseband signal to the baseband. The baseband converts the processed baseband signal into data, and sends the data to a corresponding application processor. A path on which the radio frequency signal is sent by the switching switch to the first processor 11 is a second receive path (or referred to as a second receive path). A port coupled to the second transmit path in the first processor 11 is a transmit port TX, and a port coupled to the second receive path in the first processor 11 is a receive port RX.

At a same time, the first antenna 13 operates on the first subband, and the second antenna 14 operates on the second subband. The first subband and the second subband are different subbands. Specifically, the first subband may include a DFS channel and a non-DFS channel, and the second subband may not include a DFS channel. Alternatively, the first subband may include a DFS channel and a non-DFS channel, and the second subband may also include a DFS channel and a non-DFS channel. In some embodiments, the first subband may include at least one first non-DFS channel, and the second subband may include at least one second non-DFS channel. A partial first subband may overlap a partial second subband. For example, both the first subband and the second subband further include a same DFS channel, and the first subband and the second subband overlap at the DFS channel. For another example, a partial first non-DFS channel overlaps a partial second non-DFS channel. That is, the partial first non-DFS channel and the partial second non-DFS channel are located on a same band. In some embodiments, the first subband may include at least one first non-DFS channel, and the second subband may include at least one second non-DFS channel. In addition, only the first subband may include the DFS channel, or only the second subband may include the DFS channel. In some embodiments, the first subband and the second subband may include different DFS channels. For example, the first subband includes at least one first non-DFS channel and a first DFS channel, and the second subband includes at least one second non-DFS channel and a second DFS channel. A band of the first DFS channel may be completely different from a band of the second DFS channel, or a partial band of the first DFS channel may be the same as a partial band of the second DFS channel. Channel range coverage is set through the first subband and the second subband, so that different antennas or different channels cover a more proper range, and a proper antenna or channel may be conveniently selected for signal communication (Wi-Fi communication), thereby ensuring continuity of communication.

The first processor 11 may control the first antenna 13 and the second antenna 14 to operate on an available band, or may simultaneously perform radar signal interception on a DFS channel of the first subband and a DFS channel of the second subband. Specifically, the wireless AP 10 starts to operate after being powered on and initialized, and the first processor 11 performs radar signal interception on the DFS channel of the first subband and the DFS channel of the second subband. The first processor 11 is configured to control, based on an interception result, the first antenna 13 to operate on the first DFS channel of the first subband, and control the second antenna 14 to operate on the first channel of the second subband. It may be understood that the first processor 11 selects, based on the interception result, the first DFS channel of the first subband on which the radar signal does not exist and the first channel of the second subband to operate. When the first antenna 13 operates on the first DFS channel of the first subband and the second antenna 14 operates on the first channel of the second subband, the first processor 11 continues to perform radar signal interception on the DFS channel of the first subband and the DFS channel of the second subband. When the radar signal exists on the first DFS channel of the first subband, the first processor 11 is configured to transfer a communication signal to the first channel of the second subband for transmission. When the radar signal does not exist on the first DFS channel of the first subband, the first processor 11 is configured to transmit the communication signal through the first DFS channel of the first subband.

The DFS channel of the first subband may be all DFS channels of the first subband, and the DFS channel of the second subband may be all DFS channels of the second subband.

The first channel may be the first DFS channel of the second subband.

In some embodiments, when the first processor 11 transfers the communication signal to the first DFS channel of the second subband for transmission, the first processor 11 is configured to control the first antenna 13 to operate on the second DFS channel of the first subband, and perform radar signal interception on the DFS channel of the first subband and the DFS channel of the second subband. When the radar signal exists on the first DFS channel of the second subband, the first processor 11 is configured to stop transmitting the communication signal through the first DFS channel of the second subband, and transfer the communication signal to the second DFS channel of the first subband for transmission. Because the wireless AP 10 simultaneously operates on both the first DFS channel of the second subband and the second DFS channel of the first subband, when the radar signal appears on the first DFS channel of the second subband on which the communication signal is transmitted, the first processor 11 may switch the communication signal to the second DFS channel of the first subband that has already been operating for transmission, thereby avoiding interruption of transmission of the communication signal.

In some embodiments, when the first processor 11 transfers the communication signal to the first DFS channel of the second subband for transmission, the first processor 11 is configured to control the first antenna to operate on a first non-DFS channel of the first subband, and perform radar signal interception on the DFS channel of the second subband. When the radar signal exists on the first DFS channel of the second subband, the first processor 11 is configured to stop transmitting the communication signal through the first DFS channel of the second subband, and transfer the communication signal to the first non-DFS channel of the first subband for transmission. Because the wireless AP 10 simultaneously operates on both the first non-DFS channel of the first subband and the first DFS channel of the second subband, when the radar signal appears on the first DFS channel of the second subband on which the communication signal is transmitted, the first processor 11 may switch the communication signal to the first non-DFS channel of the first subband that has already been operating for transmission, thereby avoiding interruption of signal transmission.

In some embodiments, when the radar signal does not exist on the first DFS channel of the first subband, the first processor 11 is further configured to transmit the communication signal through the first DFS channel of the second subband. In other words, when the radar signal does not exist on the first DFS channel of the first subband, the first processor 11 may transmit the communication signal through the first DFS channel of the first subband, or may transmit the communication signal through the first DFS channel of the second subband. When the radar signal does not exist on the first DFS channel of the first subband, the first processor 11 may select, based on a data transmission requirement, the first DFS channel of the first subband and/or the first DFS channel of the second subband to transmit the communication signal, to increase a transmission rate of the communication signal.

Alternatively, the first channel may be a first non-DFS channel of the second subband.

In some embodiments, when the radar signal does not exist on the first DFS channel of the first subband, the first processor 11 is further configured to transmit the communication signal through a first non-DFS channel of the second subband. In other words, when the radar signal does not exist on the first DFS channel of the first subband, the first processor 11 may transmit the communication signal through the first DFS channel of the first subband, or may transmit the communication signal through the first non-DFS channel of the second subband. In this case, the first communication signal may be transmitted through the first antenna 13, and the second communication signal may simultaneously be transmitted through the second antenna 14. The first communication signal and the second communication signal may be different data flows in a MIMO (Multiple-Input Multiple-Output, multiple-input multiple-output) scenario. In addition, when a plurality of first antennas 13 are included, each first antenna 13 may further transmit different data flows in the MIMO (Multiple-Input Multiple-Output, multiple-input multiple-output) scenario, and different first antennas 13 may all support the first subband. When a plurality of second antennas 14 are included, each second antenna 14 may further transmit different data flows in the MIMO (Multiple-Input Multiple-Output, multiple-input multiple-output) scenario, and different second antennas 14 may all support the second subband. When the radar signal does not exist on the first DFS channel of the first subband, the first processor 11 may select, based on a data transmission requirement, the first DFS channel of the first subband and/or the first non-DFS channel of the second subband to transmit the communication signal, to increase a transmission rate of the communication signal.

Because the radar signal does not exist on the non-DFS channel, the first processor 11 does not need to perform radar signal interception on the non-DFS channel.

The first DFS channel of the first subband, the first DFS channel of the second subband, and the second DFS channel of the first subband are different DFS channels. The first DFS channel, the first non-DFS channel of the first subband, and the first non-DFS channel of the second subband may be same or different non-DFS channels.

The first subband may be a band ranging from 5470 MHz to 5850 MHz, and the second subband may be a band ranging from 5150 MHz to 5350 MHz. Alternatively, the first subband and the second subband may be other Wi-Fi bands.

According to the wireless access point provided in embodiments of this application, the first processor 11 simultaneously controls the first antenna 13 to operate on a first DFS channel of the first subband and the second antenna 14 to operate on a first channel of the second subband. When the radar signal exists on the first DFS channel of the first subband, the first processor 11 may transfer the communication signal to the first channel of the second subband for transmission. When the radar signal does not exist on the first DFS channel of the first subband, the first processor 11 may transmit the communication signal on the first DFS channel of the first subband. Before the radar signal appears on the first DFS channel of the first subband, the second antenna 14 has already been operating on the first channel of the second subband. Therefore, the first processor 11 may directly transfer the communication signal transmitted on the first DFS channel of the first subband to the first channel of the second subband for transmission, thereby ensuring continuous transmission of the communication signal.

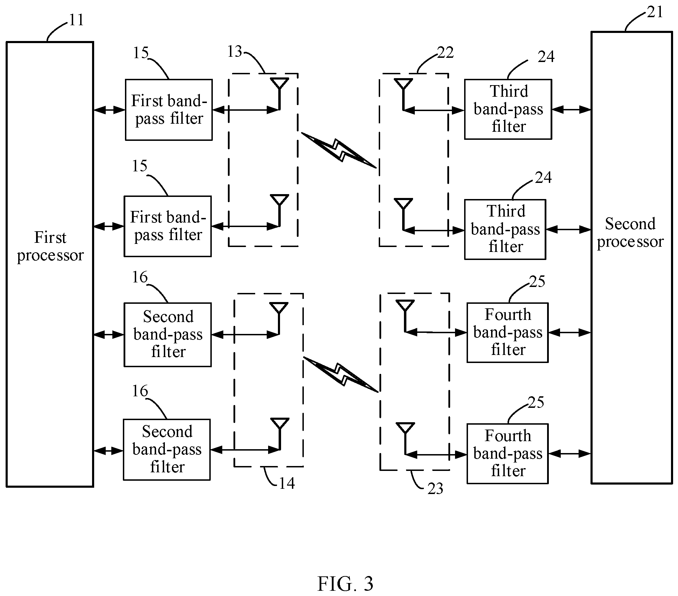

Refer to FIG. 3. In an embodiment, the wireless AP 10 further includes a first band-pass filter 15 and a second band-pass filter 16. A quantity of first band-pass filters 15 is in a one-to-one correspondence with a quantity of first antennas 13, and a quantity of second band-pass filters 16 is in a one-to-one correspondence with a quantity of second antennas 14. The first band-pass filter 15 is coupled between the corresponding first antenna 13 and the first processor 11. The second band-pass filter 16 is coupled between the corresponding second antenna 14 and the first processor 11. The first band-pass filter 15 is configured to filter the communication signal transmitted by the first antenna 13. The second band-pass filter 16 is configured to filter the communication signal transmitted by the second antenna 14. The first band-pass filter 15 and the second band-pass filter 16 may isolate communication signals transmitted by the first antenna 13 and the second antenna 14, to avoid mutual interference.

Because the first processor 11 may simultaneously perform CAC on the DFS channel of the first subband and the DFS channel of the second subband, the first processor 11 may perform CAC on the DFS channel of the first subband and the DFS channel of the second subband before the communication signal is transmitted through channel switching, so that the first processor 11 may directly transfer the communication signal to a radar-free channel for transmission without waiting for a CAC period.

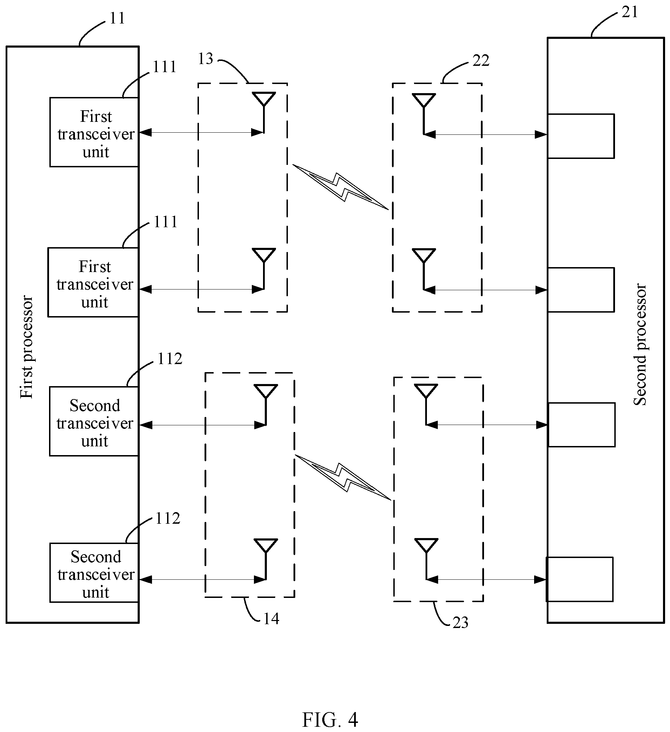

Refer to FIG. 4. In an embodiment, the first processor 11 detects a signal received by one or more first antennas 13, to intercept whether the radar signal exists on the DFS channel of the first subband. The first processor 11 further detects a signal received by one or more the second antennas 14, to intercept whether the radar signal exists on the DFS channel of the second subband.

Specifically, the first processor 11 includes at least one first transceiver unit 111 and at least one second transceiver unit 112, where the first transceiver unit 111 is coupled to the first antenna 13. The second transceiver unit 112 is coupled to the second antenna 14. The first transceiver unit 111 and the second transceiver unit 112 are configured to send and receive signals. The first transceiver unit 111 further detects the received signal, to intercept whether the radar signal exists on the DFS channel of the first subband. The second transceiver unit 112 further detects the received signal, to intercept whether the radar signal exists on the DFS channel of the second subband.

The first transceiver unit 111 performs, in an idle period in which data transmission does not need to be performed, CAC on a signal received by the first antenna 13, and the second transceiver unit 112 performs, in an idle period in which data transmission does not need to be performed, CAC on a signal received by the second antenna 14. Therefore, through time division multiplexing on the first antenna 13 and the second antenna 14, costs of performing CAC on the DFS channel by the wireless AP 10 may be greatly reduced.

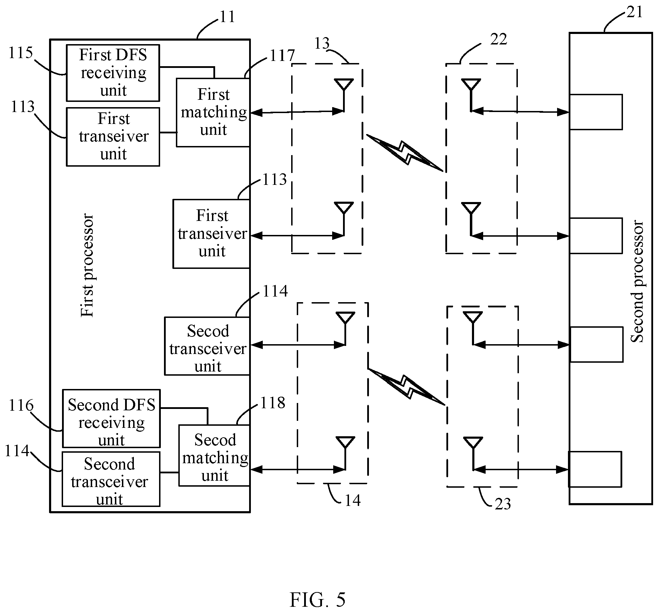

Refer to FIG. 5, in an embodiment, the first processor 11 further includes at least one first transceiver unit 113, at least one second transceiver unit 114, a first DFS receiving unit 115, a second DFS transceiver unit 116, at least one first matching unit 117, and at least one second matching unit 118. The first DFS receiving unit 115 and the first transceiver unit 113 are respectively coupled to the first antenna 13 through the first matching unit 117, and the second DFS transceiver unit 116 and the second transceiver unit 114 are respectively coupled to the second antenna 14 through the second matching unit 118. The first transceiver unit 113 and the second transceiver unit 114 are configured to send and receive signals. Through the first matching unit 117, the first DFS receiving unit 115 shares the same first antenna 13 with one of the first transceiver units 113, and through the second matching unit 118, the second DFS transceiver unit 116 shares the same second antenna 14 with one of the second transceiver units 114. Therefore, a data transmission throughput rate of the wireless AP 10 may be ensured, and costs of performing CAC on the DFS channel by the wireless AP 10 may further be reduced. The firstDFS receiving unit 115 may scan the DFS channel of the first subband, to intercept whether the radar signal exists on the DFS channel of the first subband. The second DFS transceiver unit 116 may scan the DFS channel of the second subband, to intercept whether the radar signal exists on the DFS channel of the second subband. The first matching unit 117 may be a switch or a coupler, and the second matching unit 118 may be a switch or a coupler.

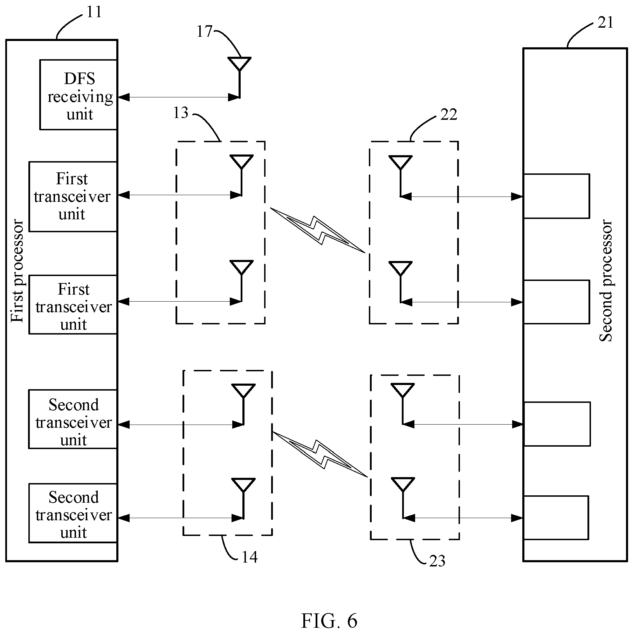

Refer to FIG. 6. In an embodiment, the wireless AP 10 further includes a fifth antenna 17. The first processor 11 further includes at least one first transceiver unit 101, at least one second transceiver unit 102, and a DFS receiving unit 103. The fifth antenna 17 is coupled to the DFS receiving unit 103. The first transceiver unit 101 is coupled to the first antenna 13. The second transceiver unit 102 is coupled to the second antenna 14. The first transceiver unit 101 and the second transceiver unit 102 are configured to send and receive signals. The DFS receiving unit 103 detects a signal received by the fifth antenna 17, to intercept whether the radar signal exists on the DFS channel of the first subband and the DFS channel of the second subband.

The first processor 11 may control the fifth antenna 17 to operate on the first subband and the second subband, and control the fifth antenna 17 to receive signals on the first subband and the second subband. The first processor 11 detects the signal received by the fifth antenna 17, so that the first processor 11 may perform CAC on the DFS channel of the first subband, and may also perform CAC on the DFS channel of the second subband.

The fifth antenna 17 is used to perform CAC on the DFS channel of the first subband and the DFS channel of the second subband, to avoid a problem that data communication of the wireless AP 10 is interrupted because the wireless AP 10 needs to perform CAC on the DFS channel of the first subband and the DFS channel of the second subband in a channel switching process of transmitting the communication signal, and the transmission throughput rate of the wireless AP 10 may be ensured.

The first processor 11 may further include more or fewer components, or combine some components, or have different component arrangements. For example, the first processor 11 may further include another interface, and a component or a circuit that implements a function such as storage. Alternatively, a function of the first processor 11 may be implemented by a plurality of chips. For example, a baseband part may be implemented by another chip, and a radio frequency may be split into a 2.4G radio frequency, a 5G radio frequency, or the like. In addition, quantities of the first antenna 13, the first band-pass filter 15, the second antenna 14, and the second band-pass filter 16 included in the wireless AP 10 may be adjusted based on an actual situation during specific implementation, which is not limited herein.

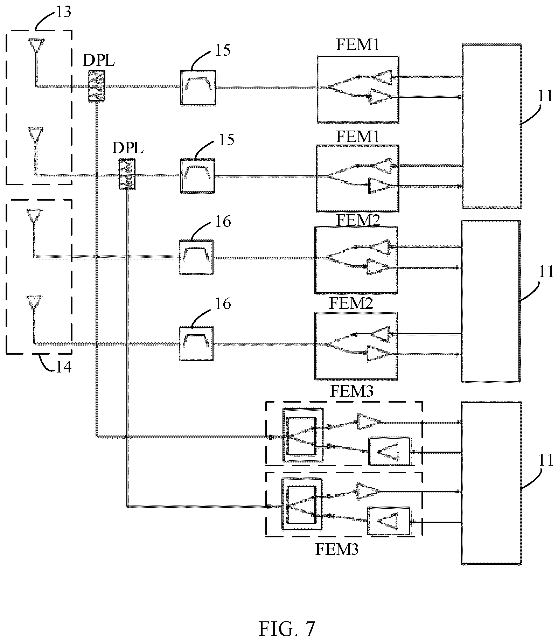

Refer to FIG. 7. In an embodiment, the wireless AP 10 further includes a first radio frequency front-end module FEM 1 and a second radio frequency front-end module FEM 2. A quantity of first radio frequency front-end modules FEM 1 is in a one-to-one correspondence with a quantity of first antennas 13, and a quantity of second radio frequency front-end modules FEM 2 is in a one-to-one correspondence with a quantity of second antennas 14. The first radio frequency front-end module FEM 1 is coupled between the first processor 11 and the first band-pass filter 15, and is configured to amplify and process the communication signal transmitted by the first antenna 13, to increase a transmission rate and a transmission distance of the communication signal of the first antenna 13. The second radio frequency front-end module FEM 2 is coupled between the first processor 11 and the second band-pass filter 16, and is configured to amplify and process the communication signal transmitted by the second antenna 14, to increase a transmission rate and a transmission distance of the communication signal of the second antenna 14.

The wireless AP 10 further includes a combiner DPL and a third radio frequency front-end module FEM 3. A quantity of combiners DPL is in a one-to-one correspondence with a quantity of third radio frequency front-end modules FEM 3. The combiner DPL may be coupled between the first antenna 13 and the first band-pass filter 15, and the third radio frequency front-end module FEM 3 is separately coupled to the combiner DPL and the first processor 11. Through the combiner DPL, the first antenna 13 may be further configured to send and receive the signal of the first band, so that use of antennas may be reduced, and a trouble of antenna switching may be avoided. The third radio frequency front-end module FEM 3 is configured to amplify and process the communication signal transmitted by the first antenna 13, to increase a transmission rate and a transmission distance of the communication signal of the first antenna 13.

In this embodiment, a quantity of first processors 11 is three, and each first processor 11 is separately coupled to the first radio frequency front-end module FEM 1, the second radio frequency front-end module FEM 2, and the third radio frequency front-end module FEM 3. That is, the quantity of first processors 11 may be set based on a quantity of radio frequency channels, which is not limited herein.

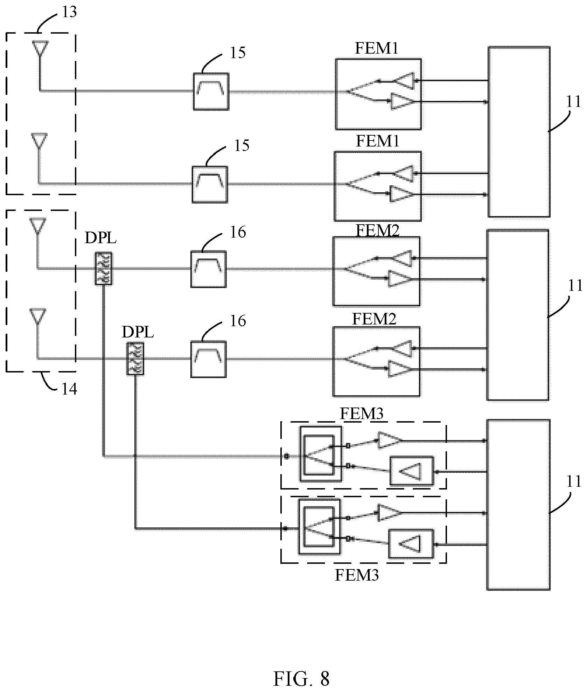

Refer to FIG. 8. The combiner DPL may be further coupled between the second antenna 14 and the second band-pass filter 16, and the third radio frequency front-end module FEM 3 is separately coupled to the combiner DPL and the first processor 11. The second antenna 14 may be further configured to send and receive the signal of the first band, so that use of antennas may be reduced, and a trouble of antenna switching may be avoided.

In this embodiment, a quantity of first processors 11 is three. The first radio frequency front-end module FEM 1, the second radio frequency front-end module FEM 2, and the third radio frequency front-end module FEM 3 are respectively coupled to one first processor 11.

The combiner DPL may be a dual-band combiner, a tri-band combiner, a quad-band combiner, or another multi-band combiner.

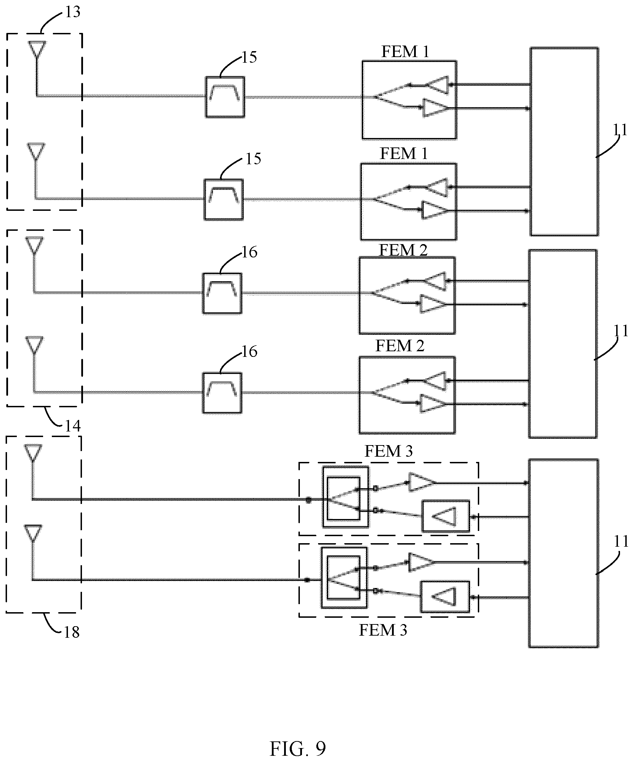

Refer to FIG. 9. In an embodiment, the wireless AP 10 may further include a sixth antenna 18 and the third radio frequency front-end module FEM 3. A quantity of sixth antennas 18 is in a one-to-one correspondence with a quantity of third radio frequency front-end modules FEM 3. The third radio frequency front-end module FEM 3 is coupled between the corresponding sixth antenna 18 and the first processor 11, so that a trouble of antenna switching may be avoided. The third radio frequency front-end module FEM 3 is configured to amplify and process the communication signal transmitted by the sixth antenna 18, to increase a transmission rate and a transmission distance of the communication signal of the sixth antenna 18.

In this embodiment, a quantity of first processors 11 is three. The first radio frequency front-end module FEM 1, the second radio frequency front-end module FEM 2, and the third radio frequency front-end module FEM 3 are respectively coupled to one first processor 11.

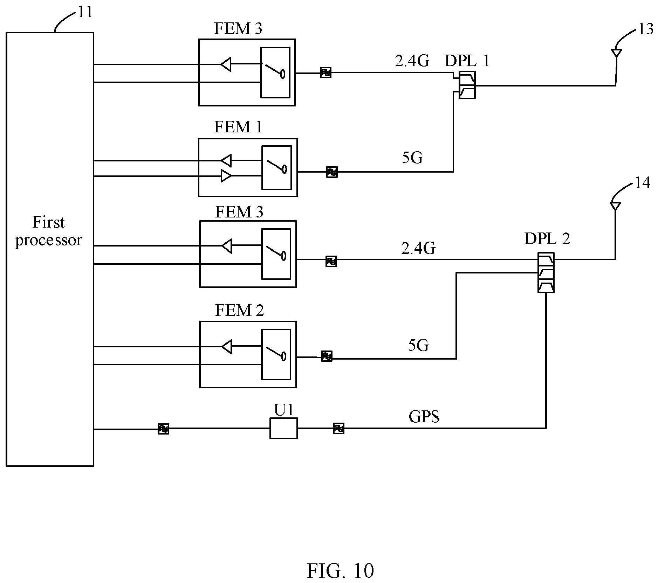

Refer to FIG. 10. In an embodiment, a first antenna 13 may be configured to send and receive signals of a first band and a second band, and a second antenna 14 may be configured to send and receive signals of the first band and the second band. A combiner DPL 1 is arranged between the first antenna 13 and the first radio frequency front-end module FEM 1 and between the first antenna 13 and the third radio frequency front-end module FEM 3, and a combiner DPL 2 is arranged between the second antenna 14 and the second radio frequency front-end module FEM 2 and between the second antenna 14 and the third radio frequency front-end module FEM 3, to reduce use of antennas, and avoid a trouble of antenna switching.

The first band and the second band may be bands corresponding to 2G, 3G, 4G, or 5G.

The first antenna 13 or the second antenna 14 may be further configured to receive a GPS (Global Positioning System, global positioning system) signal, and the GPS signal received by the first antenna 13 or the second antenna 14 may be sequentially transmitted to the first processor 11 through a combiner, a filter, and a low noise amplifier U1.

The combiner DPL 1 and the combiner DPL 2 may be a dual-band combiner, a tri-band combiner, a quad-band combiner, or another multi-band combiner.

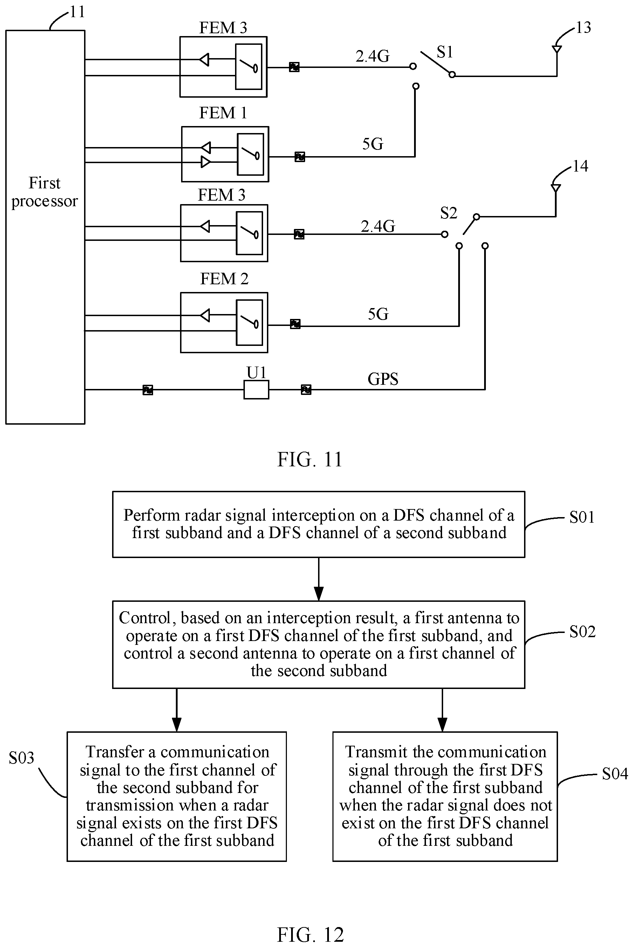

Refer to FIG. 11. The combiner DPL 1 may further be replaced with a single-pole multi-throw switch S 1, and the combiner DPL 2 may further be replaced with a single-pole multi-throw switch S2. The first processor 11 switches a radio frequency channel through switching the single-pole multi-throw switch S1 and the single-pole multi-throw switch S2. The combiner may further use another component that may implement radio frequency channel switching. This is not limited herein.

It should be noted that the radio frequency channel includes a transmit channel and a receive channel.

In embodiments of this application, structures and compositions of the first radio frequency front-end module FEM 1, the second radio frequency front-end module FEM 2, and the third radio frequency front-end module FEM 3 are not limited, and any radio frequency front-end module in the conventional technology may be used.

A person skilled in the art may understand that a structure of the radio frequency front-end module shown in the figure does not constitute a limitation on the radio frequency front-end module. The radio frequency front-end module may include more or fewer components than those shown in the figure, or combine some components, or have different component arrangements. For example, when the wireless AP 10 does not need to improve a transmit capability of an antenna, a radio frequency front-end module that does not include a power amplifier may be coupled to the antenna. When the wireless AP 10 does not need to improve a receive capability of an antenna, a radio frequency front-end module that does not include a low noise amplifier may be coupled to the antenna.

Refer to FIG. 2. The user terminal 20 includes a second processor 21, at least one third antenna 22, and at least one fourth antenna 23. The third antenna 22 and the fourth antenna 23 are separately coupled to the second processor 21.

The second processor 21 may include one or more processing units. For example, the second processor 21 may include a controller, a baseband, and/or a radio frequency integrated circuit. The controller may generate an operation control signal based on an instruction operation code and a time sequence signal, to complete control of instruction reading and instruction execution. A memory may be arranged in the second processor 21, and is configured to store instructions and data. In some embodiments, the memory in the second processor 21 includes a cache. The memory may store instructions or data that are/is just used or cyclically used by the second processor 21. If the second processor 21 needs to use the instructions or the data again, the second processor 21 may directly invoke the instructions or the data from the memory. This avoids repeated access and reduces a waiting time of the second processor 21, thereby improving system efficiency. In some embodiments, the memory may be further arranged outside the second processor 21, and is coupled to the second processor 21.

The second processor 21 may perform frequency modulation on a signal based on a wireless communication technology. The wireless communication technology may include a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

The third antenna 22 is configured to transmit and receive an electromagnetic wave signal (a radio frequency signal, for example, a Wi-Fi signal). The third antenna 22 or a plurality of groups of antennas may be configured to cover one or more communication bands. The plurality of antennas each may be one or more of a multi-band antenna, an array antenna, or an on-chip (on-chip) antenna.

The second processor 21 is coupled to the third antenna 22, to implement various functions associated with transmitting and receiving the radio frequency signal. For example, when the electronic device transmits a signal, a baseband synthesizes to-be-transmitted data (a digital signal) into a to-be-transmitted baseband signal, and the baseband signal is converted by the radio frequency integrated circuit into a sending signal (the radio frequency signal). The sending signal is amplified by a power amplifier, and an amplified output signal output by the power amplifier is transmitted to a switching switch and transmitted by the third antenna 22. A path on which the sending signal sent by the second processor 21 to the switching switch is a third transmit path (or referred to as a third transmit path). When the electronic device needs a receive signal, the third antenna 22 sends the receive signal (the radio frequency signal) to the switching switch. The switching switch sends the radio frequency signal to the radio frequency integrated circuit. The radio frequency integrated circuit 102 processes the radio frequency signal into a baseband signal and sends the baseband signal to the baseband. The baseband converts the processed baseband signal into data, and sends the data to a corresponding application processor. A path on which the radio frequency signal is sent by the switching switch to the second processor 21 is a third receive path (or referred to as a third receive path). A port coupled to the third transmit path in the second processor 21 is a transmit port TX, and a port coupled to the third receive path in the second processor 21 is a receive port RX.

The fourth antenna 23 is configured to transmit and receive an electromagnetic wave signal (a radio frequency signal, for example, a Wi-Fi signal). The fourth antenna 23 or a plurality of groups of antennas may be configured to cover one or more communication bands. The plurality of antennas each may be one or more of a multi-band antenna, an array antenna, or an on-chip (on-chip) antenna.

The second processor 21 is coupled to the fourth antenna 23, to implement various functions associated with transmitting and receiving the radio frequency signal. For example, when the electronic device transmits a signal, a baseband synthesizes to-be-transmitted data (a digital signal) into a to-be-transmitted baseband signal, and the baseband signal is converted by the radio frequency integrated circuit into a sending signal (the radio frequency signal). The sending signal is amplified by a power amplifier, and an amplified output signal output by the power amplifier is transmitted to a switching switch and transmitted by the fourth antenna 23. A path on which the sending signal sent by the second processor 21 to the switching switch is a fourth transmit path (or referred to as a fourth transmit path). When the electronic device needs a receive signal, the fourth antenna 23 sends the receive signal (the radio frequency signal) to the switching switch. The switching switch sends the radio frequency signal to the radio frequency integrated circuit. The radio frequency integrated circuit processes the radio frequency signal into a baseband signal and sends the baseband signal to the baseband. The baseband converts the processed baseband signal into data, and sends the data to a corresponding application processor. A path on which the radio frequency signal is sent by the switching switch to the second processor 21 is a fourth receive path (or referred to as a fourth receive path). A port coupled to the fourth transmit path in the second processor 21 is a transmit port TX, and a port coupled to the fourth receive path in the second processor 21 is a receive port RX.

At a same time, the third antenna 22 and the fourth antenna 23 operate on different subbands. At a same time, the first antenna 13 and the third antenna 22 operate on a same subband, and the second antenna 14 and the fourth antenna 23 operate on another subband. For example, the first antenna 13 and the third antenna 22 operate on the first subband, and the second antenna 14 and the fourth antenna 23 operate on the second subband.

The second processor 21 is configured to control the third antenna 22 to operate on the first DFS channel of the first subband, and control the fourth antenna 23 to operate on the first channel of the second subband.

The wireless AP 10 adds identifier information corresponding to the first DFS channel of the first subband and identifier information corresponding to the first channel of the second subband to a broadcast message, and broadcasts the broadcast message to a user terminal 20. The user terminal 20 receives the broadcast message, and obtains, by parsing the broadcast message, the identifier information corresponding to the first DFS channel of the first subband and the identifier information corresponding to the first channel of the second subband, to learn the first DFS channel of the first subband and the first channel of the second subband on which the wireless AP 10 currently operates, and determine an operating frequency range corresponding to the first DFS channel of the first subband and an operating frequency range corresponding to the first channel of the second subband. The user terminal 20 sends an authentication request to the wireless AP 10, and requests to access a WLAN network provided by the wireless AP 10. The authentication request includes a shared key. The wireless AP 10 authenticates the user terminal 20 based on the shared key, and after the authentication succeeds, sends an authentication response to the user terminal 20. The user terminal 20 sends an association request to the wireless AP 10, and requests to associate with the WLAN network provided by the wireless AP 10. After the association succeeds, the wireless AP 10 sends an association response to the user terminal 20, so that the user terminal 20 establishes association with the wireless AP 10 on the first DFS channel of the first subband, and establishes association with the wireless AP 10 on the first channel of the second subband.

When the radar signal exists on the first DFS channel of the first subband, the second processor 21 is configured to transfer a communication signal to the first channel of the second subband for transmission. When the first processor 11 intercepts that the radar signal exists on the first DFS channel of the first subband, the wireless AP 10 broadcasts, to the user terminal 20, a message indicating that the radar signal exists on the first DFS channel of the first subband, so that the second processor 21 transfers the communication signal to the first channel of the second subband for transmission. When the radar signal does not exist on the first DFS channel of the first subband, the second processor 21 is configured to transmit the communication signal through the first DFS channel of the first subband. When the first processor 11 intercepts that the radar signal does not exist on the first DFS channel of the first subband, the wireless AP 10 may also broadcast, to the user terminal 20, a message indicating that the radar signal does not exist on the first DFS channel of the first subband, and the second processor 21 transmits the communication signal through the first DFS channel of the first subband.

The first channel may be the first DFS channel of the second subband.

In some embodiments, when the second processor 21 transfers the communication signal to the first DFS channel of the second subband for transmission, the second processor 21 is configured to control the third antenna 22 to operate on the second DFS channel of the first subband. When the radar signal exists on the first DFS channel of the second subband, the second processor 21 is configured to stop transmitting the communication signal through the first DFS channel of the second subband, and transfer the communication signal to the second DFS channel of the first subband for transmission. When the first processor 11 transfers the communication signal to the first DFS channel of the second subband for transmission and the second processor 21 transfers the communication signal to the first DFS channel of the second subband for transmission, the wireless AP 10 broadcasts, to the user terminal 20, a message for selecting the second DFS channel of the first subband to operate, so that the second processor 21 controls the third antenna 22 to operate on the second DFS channel of the first subband, to establish association with the wireless AP 10 on the second DFS channel of the first subband. Because the user terminal 20 simultaneously operates on both the first DFS channel of the second subband and the second DFS channel of the first subband, when the radar signal appears on the first DFS channel of the second subband on which the communication signal is transmitted, the second processor 21 may switch the communication signal to the second DFS channel of the first subband that has already been operating for transmission, thereby avoiding interruption of transmission of the communication signal.

In some embodiments, when the second processor 21 transfers the communication signal to the first DFS channel of the second subband for transmission, the second processor 21 is configured to control the third antenna 22 to operate on the first non-DFS channel of the first subband. When the radar signal exists on the first DFS channel of the second subband, the second processor 21 is configured to stop transmitting the communication signal through the first DFS channel of the second subband, and transfer the communication signal to the first non-DFS channel of the first subband for transmission. When the first processor 11 transfers the communication signal to the first DFS channel of the second subband for transmission and the second processor 21 transfers the communication signal to the first DFS channel of the second subband for transmission, the wireless AP 10 broadcasts, to the user terminal 20, a message for selecting the first non-DFS channel of the first subband to operate, so that the second processor 21 controls the third antenna 22 to operate on the first non-DFS channel of the first subband, to establish association with the wireless AP 10 on the first non-DFS channel of the first subband. Because the user terminal 20 simultaneously operates on both the first non-DFS channel of the first subband and the first DFS channel of the second subband, when the radar signal appears on the first DFS channel of the second subband on which the communication signal is transmitted, the second processor 21 may switch the communication signal to the first non-DFS channel of the first subband that has already been operating for transmission, thereby avoiding interruption of signal transmission.

In some embodiments, when the radar signal does not exist on the first DFS channel of the first subband, the second processor 21 is further configured to transmit the communication signal through the first DFS channel of the second subband. In other words, when the radar signal does not exist on the first DFS channel of the first subband, the second processor 21 may transmit the communication signal through the first DFS channel of the first subband, or may transmit the communication signal through the first DFS channel of the second subband. When the radar signal does not exist on the first DFS channel of the first subband, the second processor 21 may select, based on a data transmission requirement, the first DFS channel of the first subband and/or the first non-DFS channel of the second subband to transmit the communication signal, to increase a transmission rate of the communication signal.

Alternatively, the first channel may be a first non-DFS channel of the second subband.

In some embodiments, when the radar signal does not exist on the first DFS channel of the first subband, the second processor 21 is further configured to transmit the communication signal through a first non-DFS channel of the second subband. In other words, when the radar signal does not exist on the first DFS channel of the first subband, the second processor 21 may transmit the communication signal through the first DFS channel of the first subband, or may transmit the communication signal through the first non-DFS channel of the second subband. When the radar signal does not exist on the first DFS channel of the first subband, the second processor 21 may select, based on a data transmission requirement, the first DFS channel of the first subband and/or the first non-DFS channel of the second subband to transmit the communication signal, to increase a transmission rate of the communication signal.

The second processor 21 may be any chip having a receiving and sending function, and the second processor 21 may further be referred to as a Wi-Fi chip.

Refer to FIG. 3. The user terminal 20 further includes a third band-pass filter 24 and a fourth band-pass filter 25. A quantity of third band-pass filters 24 is in a one-to-one correspondence with a quantity of third antennas 22, and a quantity of fourth band-pass filters 25 is in a one-to-one correspondence with a quantity of fourth antennas 23. The third band-pass filter 24 is coupled between the corresponding third antenna 22 and the second processor 21. The fourth band-pass filter 25 is coupled between the corresponding fourth antenna 23 and the second processor 21. The third band-pass filter 24 is configured to filter the communication signal transmitted by the third antenna 22. The fourth band-pass filter 25 is configured to filter the communication signal transmitted by the fourth antenna 23. The third band-pass filter 24 and the fourth band-pass filter 25 may isolate communication signals transmitted by the third antenna 22 and the fourth antenna 23, to avoid mutual interference.

The third antenna 22 and the fourth antenna 23 of the user terminal 20 may also be used to transmit signals of a band corresponding to 2G, 3G, 4G, 5G, or GPS.

According to the user terminal in embodiments of this application, the second processor 21 simultaneously controls the third antenna 22 to operate on a first DFS channel of the first subband and the fourth antenna 23 to operate on a first channel of the second subband. When the radar signal exists on the first DFS channel of the first subband, the second processor 21 may transfer the communication signal to the first channel of the second subband for transmission. When the radar signal does not exist on the first DFS channel of the first subband, the second processor 21 may transmit the communication signal on the first DFS channel of the first subband. Before the radar signal appears on the first DFS channel of the first subband, the fourth antenna 23 has already been operating on the first channel of the second subband. Therefore, the second processor 21 may directly transfer the communication signal transmitted on the first DFS channel of the first subband to the first channel of the second subband for transmission, thereby ensuring continuous transmission of the communication signal.

An embodiment of this application further provides a wireless communication system. The wireless communication system includes the wireless access point and the user terminal described in any one of the foregoing embodiments.

Refer to FIG. 12. An embodiment of this application further provides a wireless communication method. The wireless communication method includes the following steps.

Step S01. Perform radar signal interception on a DFS channel of a first subband and a DFS channel of a second subband.

Step S02. Control, based on an interception result, a first antenna to operate on a first DFS channel of the first subband, and control a second antenna to operate on a first channel of the second subband.

Step S03. Transfer a communication signal to the first channel of the second subband for transmission when a radar signal exists on the first DFS channel of the first subband.

Step S04. Transmit the communication signal through the first DFS channel of the first subband when the radar signal does not exist on the first DFS channel of the first subband.

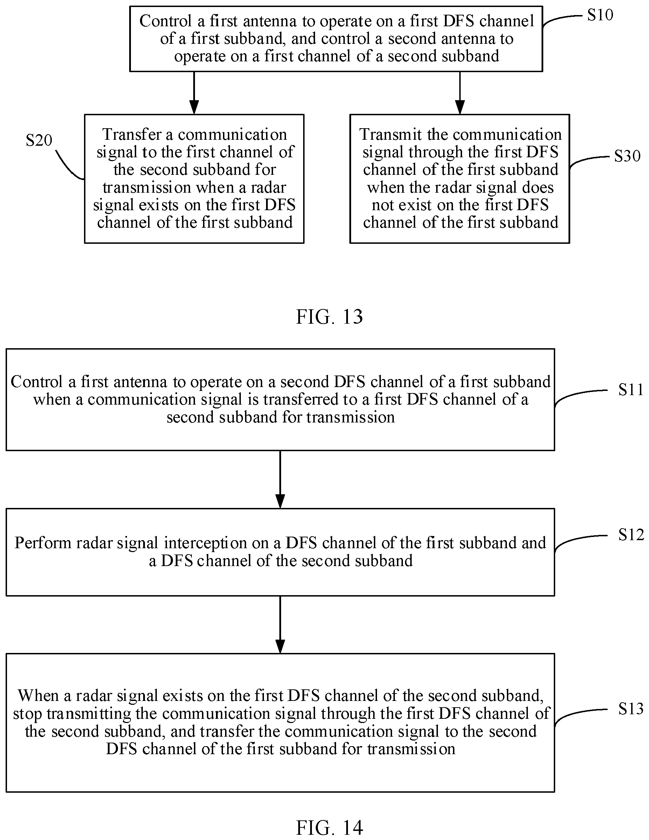

Refer to FIG. 13. An embodiment of this application further provides a wireless communication method. The wireless communication method includes the following steps.

Step S10. Control a first antenna to operate on a first DFS channel of a first subband, and control a second antenna to operate on a first channel of a second subband.

Step S20. Transfer a communication signal to the first channel of the second subband for transmission when a radar signal exists on the first DFS channel of the first subband.

Step S30. Transmit the communication signal through the first DFS channel of the first subband when the radar signal does not exist on the first DFS channel of the first subband.

Refer to FIG. 14. In some embodiments, the first channel is a first DFS channel of the second subband, and the wireless communication method further includes the following steps.

Step S11. Control the first antenna to operate on the second DFS channel of the first subband when the communication signal is transferred to the first DFS channel of the second subband for transmission.

Step S12. Perform radar signal interception on a DFS channel of a first subband and a DFS channel of a second subband.

Step S13. When the radar signal exists on the first DFS channel of the second subband, stop transmitting the communication signal through the first DFS channel of the second subband, and transfer the communication signal to the second DFS channel of the first subband for transmission.

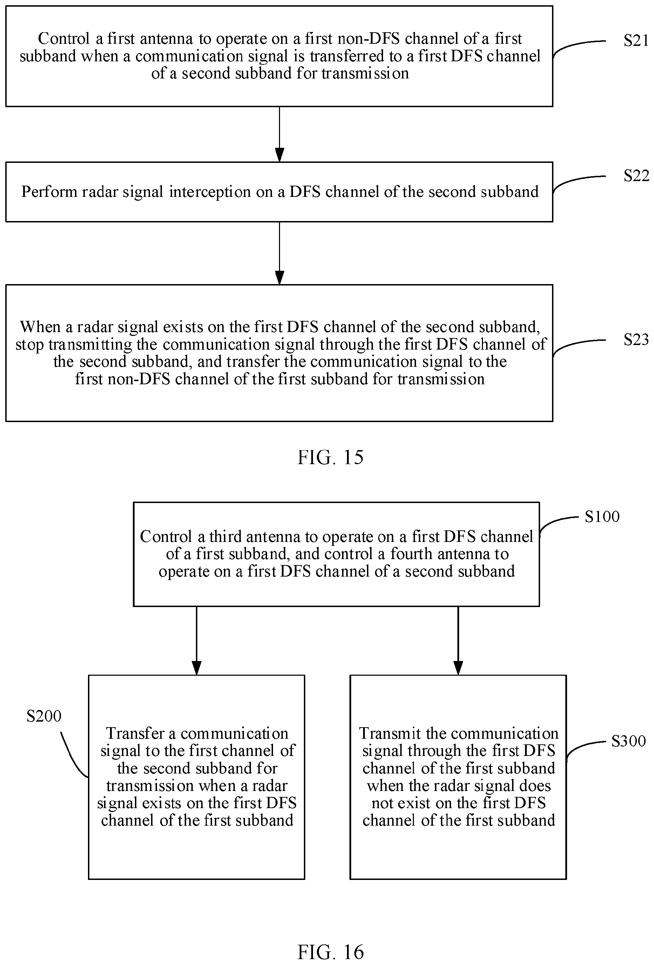

Refer to FIG. 15. In some embodiments, the first channel is a first DFS channel of the second subband, and the wireless communication method further includes the following steps.

Step S21. Control the first antenna to operate on a first non-DFS channel of the first subband when the communication signal is transferred to the first DFS channel of the second subband for transmission.

Step S22. Perform radar signal interception on a DFS channel of the second subband.

Step S23. When the radar signal exists on the first DFS channel of the second subband, stop transmitting the communication signal through the first DFS channel of the second subband, and transfer the communication signal to the first non-DFS channel of the first subband for transmission.

In some embodiments, the first channel is a first DFS channel of the second subband, and the wireless communication method further includes:
transmitting the communication signal through the first DFS channel of the second subband when the radar signal does not exist on the first DFS channel of the first subband.

In some embodiments, the first channel is a first non-DFS channel of the second subband, and the wireless communication method further includes:
transmitting the communication signal through the first non-DFS channel of the second subband when the radar signal does not exist on the first DFS channel of the first subband.

The first subband may be a band ranging from 5470 MHz to 5850 MHz, and the second subband may be a band ranging from 5150 MHz to 5350 MHz. Alternatively, the first subband and the second subband may be other Wi-Fi bands.

According to the wireless communication method provided in embodiments of this application, the first antenna is controlled to operate on a first DFS channel of the first subband and the second antenna is controlled to operate on a first channel of the second subband. When the radar signal exists on the first DFS channel of the first subband, the communication signal is transferred to the first channel of the second subband for transmission. When the radar signal does not exist on the first DFS channel of the first subband, the communication signal is transmitted on the first DFS channel of the first subband. Before the radar signal appears on the first DFS channel of the first subband, the second antenna has already been operating on the first channel of the second subband. Therefore, the communication signal transmitted on the first DFS channel of the first subband is directly transferred to the first channel of the second subband for transmission, thereby ensuring continuous transmission of the communication signal.

Refer to FIG. 16. An embodiment of this application further provides a wireless communication method. The wireless communication method includes the following steps.

Step S100. Control a third antenna to operate on a first DFS channel of a first subband, and control a fourth antenna to operate on a first channel of a second subband.

Step S200. Transfer a communication signal to the first channel of the second subband for transmission when a radar signal exists on the first DFS channel of the first subband.

Step S300. Transmit the communication signal through the first DFS channel of the first subband when the radar signal does not exist on the first DFS channel of the first subband.

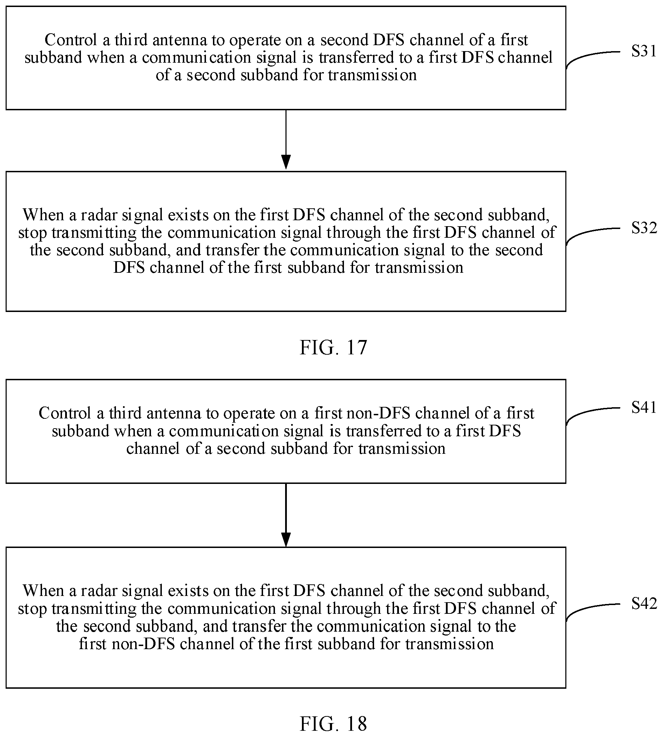

Refer to FIG. 17. In some embodiments, the first channel is a first DFS channel of the second subband, and the wireless communication method further includes the following steps.

Step S31. Control the third antenna to operate on the second DFS channel of the first subband when the communication signal is transferred to the first DFS channel of the second subband for transmission.

Step S32. When the radar signal exists on the first DFS channel of the second subband, stop transmitting the communication signal through the first DFS channel of the second subband, and transfer the communication signal to the second DFS channel of the first subband for transmission.

Refer to FIG. 18. In some embodiments, the first channel is a first DFS channel of the second subband, and the wireless communication method further includes the following steps.

Step S41. Control the third antenna to operate on a first non-DFS channel of the first subband when the communication signal is transferred to the first DFS channel of the second subband for transmission.

Step S42. When the radar signal exists on the first DFS channel of the second subband, stop transmitting the communication signal through the first DFS channel of the second subband, and transfer the communication signal to the first non-DFS channel of the first subband for transmission.

In some embodiments, the first channel is a first DFS channel of the second subband, and the wireless communication method further includes:
transmitting the communication signal through the first DFS channel of the second subband when the radar signal does not exist on the first DFS channel of the first subband.

In some embodiments, the first channel is a first non-DFS channel of the second subband, and the wireless communication method further includes:
transmitting the communication signal through the first non-DFS channel of the second subband when the radar signal does not exist on the first DFS channel of the first subband.

The first subband may be a band ranging from 5470 MHz to 5850 MHz, and the second subband may be a band ranging from 5150 MHz to 5350 MHz. Alternatively, the first subband and the second subband may be other Wi-Fi bands.

According to the wireless communication method provided in embodiments of this application, the third antenna is controlled to operate on a first DFS channel of the first subband and the fourth antenna is controlled to operate on a first channel of the second subband. When the radar signal exists on the first DFS channel of the first subband, the communication signal is transferred to the first channel of the second subband for transmission. When the radar signal does not exist on the first DFS channel of the first subband, the communication signal is transmitted through the first DFS channel of the first subband. Before the radar signal appears on the first DFS channel of the first subband, the fourth antenna has already been operating on the first channel of the second subband. Therefore, the communication signal transmitted on the first DFS channel of the first subband may be directly transferred to the first channel of the second subband for transmission, thereby ensuring continuous transmission of the communication signal.

An embodiment of this application further provides a chip. The chip includes a processor and an interface. The interface is configured to receive code instructions, and transmit the code instructions to the processor. The processor runs the code instructions, to perform the wireless communication method described above.

An embodiment of this application further provides a computer-readable storage medium. The computer-readable storage medium includes instructions. When the instructions are run on a computer, the computer is enabled to perform the foregoing wireless communication method.

The technical features in the foregoing embodiments may be randomly combined. For concise description, not all possible combinations of the technical features in the embodiments are described. However, as long as combinations of the technical features do not conflict with each other, the combinations of the technical features are considered as falling within the scope described in this specification.

The foregoing embodiments only describe several implementations of the present invention, and their description is specific and detailed, but cannot therefore be understood as a limitation to the patent scope of the present invention. It should be noted that a person of ordinary skill in the art may make some improvements and polishing without departing from the idea of the present invention and the improvements and polishing shall fall within the protection scope of the present invention. Therefore, the protection scope of the present invention patent shall be subject to the following claims.

## Claims

1. A network device, comprising a first processor, at least one first antenna, and at least one second antenna, wherein the first antenna and the second antenna are separately coupled to the first processor, the first antenna operates on a first subband, the second antenna operates on a second subband, and the first subband covers a radar band;
a communication signal is transmitted through the second antenna when a radar signal exists on the first subband; and
the communication signal is transmitted through the first antenna when the radar signal does not exist on the first subband.

2. The network device according to claim 1, wherein
a channel on which the first subband is located is associated when the radar signal exists on the first subband.

3. The network device according to claim 1 or 2, wherein when the radar signal does not exist on the first subband, the first processor is configured to control the first antenna to operate on a second DFS (dynamic frequency selection) channel of the first subband, and perform radar signal interception on a DFS channel of the first subband and a DFS channel of the second subband; and when the radar signal exists on the first subband, the first processor is configured to stop transmitting the communication signal through a first DFS channel of the second subband, and transfer the communication signal to the second DFS channel of the first subband for transmission, wherein the first channel is the first DFS channel of the second subband.

4. The network device according to claim 1 or 2, wherein when the radar signal does not exist on the first subband, the first processor is configured to control the first antenna to operate on a first non-DFS channel of the first subband, and perform radar signal interception on a DFS channel of the second subband; and when the radar signal exists on the first subband, the first processor is configured to stop transmitting the communication signal through a first DFS channel of the second subband, and transfer the communication signal to the first non-DFS channel of the first subband for transmission, wherein the first channel is the first DFS channel of the second subband.

5. The network device according to claim 1 or 2, wherein when the radar signal does not exist on the first subband, the first processor is further configured to transmit the communication signal through a first DFS channel of the second subband, wherein the first channel is the first DFS channel of the second subband.

6. The network device according to claim 1, wherein the first channel is a first non-DFS channel of the second subband.

7. The network device according to any one of claims 1 to 6, wherein the communication signal is further transmitted through the second antenna when the radar signal does not exist on the first subband.

8. The network device according to any one of claims 1 to 6, wherein the first subband comprises 5470 MHz to 5850 MHz, and the second subband comprises 5150 MHz to 5350 MHz.

9. A user terminal, comprising a second processor, at least one third antenna, and at least one fourth antenna, wherein the third antenna and the fourth antenna are separately coupled to the second processor, the third antenna operates on a first subband, the fourth antenna operates on a second subband, and the first subband covers a radar band;
a communication signal is transmitted through the fourth antenna when a radar signal exists on the first subband; and
the communication signal is transmitted through the third antenna and the fourth antenna when the radar signal does not exist on the first subband.

10. The user terminal according to claim 9, wherein a channel on which the first subband is located is associated when the radar signal exists on the first subband.

11. The user terminal according to claim 9 or 10, wherein when the radar signal does not exist on the first subband, the second processor is configured to control the third antenna to operate on a second DFS (dynamic frequency selection) channel of the first subband; and when the radar signal exists on the first subband, the second processor is configured to stop transmitting the communication signal through a first DFS channel of the second subband, and transfer the communication signal to the second DFS channel of the first subband for transmission, wherein the first channel is the first DFS channel of the second subband.

12. The user terminal according to claim 9 or 10, wherein when the radar signal does not exist on the first subband, the second processor is configured to control the third antenna to operate on a first non-DFS channel of the first subband; and when the radar signal exists on the first subband, the second processor is configured to stop transmitting the communication signal through a first DFS channel of the second subband, and transfer the communication signal to the first non-DFS channel of the first subband for transmission, wherein the first channel is the first DFS channel of the second subband.

13. The user terminal according to claim 9 or 10, wherein when the radar signal does not exist on the first subband, the second processor is further configured to transmit the communication signal through a first DFS channel of the second subband, wherein the first channel is the first DFS channel of the second subband.

14. The user terminal according to claim 9, wherein the first channel is a first non-DFS channel of the second subband.

15. The user terminal according to any one of claims 9 to 14, wherein the communication signal is further transmitted through the fourth antenna when the radar signal does not exist on the first subband.

16. The user terminal according to any one of claims 9 to 14, wherein the first subband comprises a band ranging from 5470 MHz to 5850 MHz, and the second subband comprises a band ranging from 5150 MHz to 5350 MHz.

17. A wireless communication system, comprising the network device according to any one of claims 1 to 8 and the user terminal according to any one of claims 9 to 16.

18. A wireless communication method, comprising:
performing radar signal interception on a DFS channel of a first subband and a DFS channel of a second subband;
controlling, based on an interception result, a first antenna to operate on a first DFS channel of the first subband, and controlling a second antenna to operate on a first channel of the second subband;
transferring a communication signal to the first channel of the second subband for transmission when a radar signal exists on the first DFS channel of the first subband; and
transmitting the communication signal through the first DFS channel of the first subband when the radar signal does not exist on the first DFS channel of the first subband.

19. A chip, comprising a processor and an interface, wherein;
the interface is configured to receive code instructions, and transmit the code instructions to the processor; and
the processor runs the code instructions, to perform the wireless communication method according to claim 18.

20. A computer-readable storage medium, comprising instructions, wherein when the instructions are run on a computer, the computer is enabled to perform the wireless communication method according to claim 18.
